# EUROPEAN PATENT SPECIFICATION

(11) **EP 0 439 033 B1**
(45) Date of publication and mention of the grant of the patent: **29.03.1995**
(21) Application number: 91100325.9
(22) Date of filing: 11.01.1991
(51) Int. Cl.: B29C 45/14

(54) **Method of manufacturing steering wheel**
Verfahren zum Herstellen eines Lenkrads
Procédé pour fabriquer un volant de direction

(30) Priority: 13.01.1990 JP 4959/90
(43) Date of publication of application: 31.07.1991
(73) Proprietor: TOYODA GOSEI CO., LTD., Nishikasugai-gun Aichi-ken (JP); KOLBENSCHMIDT Aktiengesellschaft, D-74150 Neckarsulm (DE)
(72) Inventor: Abiko, Toru, Inazawa-shi, Aichi (JP); Sakane, Katunobu, Ichinomiya-shi, Aichi (JP); Harata, Mitsuru, Nagoya-shi, Aichi (JP); Yasuda, Hiroshi, Ama-gun, Aichi (JP)
(74) Representative: Blumbach, Kramer & Partner

(56) References cited:
- US-A- 4 811 472
- PATENT ABSTRACTS OF JAPAN vol. 9, no. 268 (M-424)(1991)25 October 1985 & JP-A-60 113 770 ( TOUKIYOU SHIITO )

## Description

### BACKGROUND OF THE INVENTION

The present invention relates to a method of manufacturing a steering wheel, and more particularly relates to a method of manufacturing a steering wheel, in which a coating layer is molded of a synthetic resin on a steering wheel core including an annular portion having a groove extending in the circumferential direction of the portion Such a method is known from Patent Abstracts of Japan, vol 9, no. 268(M-424)(1991) 25 October 1985 & JP-A-60 113 770 (TOUKIYOU SHIITO).

The cross section of at least the annular portion of the core of a steering wheel is shaped as U in order to reduce the weight of the core, namely, the weight of the wheel as a whole, as disclosed in the Japan Utility Model Application (OPI) No. 16559/87 (the term "OPI" as used herein means an "unexamined published application"). When such a steering wheel is to be manufactured, the core thereof is set in a molding cavity 54 defined by an upper and a lower molding dies 101 and 102, so that the outermost part 53 of the groove 52 of the annular portion 51 of the core is located as the top of the groove, as shown in Fig. 9. A synthetic resin 56 such as urethane, polypropylene and vinyl chloride is then injected into the cavity 54 through a gate 55 provided at the separation surfaces 112 of a molding die unit 100 consisting of the molding dies 101 and 102, so that a coating layer is molded of the resin on the core.

However, in such a method of manufacturing the steering wheel, if the injection of the synthetic resin 56 is completed in a short time, the synthetic resin injected through the gate 55 runs onto a wall 58 facing the gate and included in the annular portion 51 including another wall 57 and having the groove 52 defined between the walls 57 and 58 and gravitates on the wall 58 so that the resin starts filling the cavity 54 from the bottom thereof, the surface of the resin rises over the wall, and the resin flows down into the groove. In that case, since the resin 56 flows down into the groove 52 while involving much air, the coating layer is likely to have a cavity therein. Besides, the speed of the filling of the cavity 54 with the resin from the bottom of the cavity changes at the time of the inflow of the resin into the groove 52 so that the outside surface of the coating layer is likely to have a luster nonuniformity. Since the coating layer is likely to have such molding defects, it is difficult to properly manufacture the steering wheel in a short time. This is a problem.

### SUMMARY OF THE INVENTION

The present invention was made in order to solve the problem mentioned above. Accordingly, it is an object of the present invention to provide a method of manufacturing a steering wheel in a short time so that a molding defect such as a cavity is less likely to be caused.

In the method, a coating layer is molded of a synthetic resin, by using a molding die unit, on at least the annular portion of a steering wheel core including a boss, the annular portion located around the boss and having a groove extending in the circumferential direction of the annular portion, and spokes coupling the boss and the portion to each other. The method of the present invention is characterized by comprising a die opening step in which an upper and a lower molding dies, which have a gate formed at the separation surfaces of the dies and communicating with the molding cavity of the molding die unit, are opened from each other; a core setting step in which the steering wheel core is set in the molding cavity so that the opening of the groove of the annular portion having walls defining the groove between them is located at the top of the groove, one of the walls, which faces the gate and has a notched part notched to be smaller in height than the other of the walls, faces the gate at the notched part, and the top of the notched part is located below the separation surfaces of the dies; a coating layer molding step in which the dies are closed on each other and the synthetic resin is injected into the molding cavity through the gate so that the coating layer is molded of the resin on the core; and a steering wheel takeout step in which the die are opened from each other and the wheel is taken out from the dies.

In the coating layer molding step, the synthetic resin first flows into the groove of the annular portion of the core through the notched part of the portion, and thereafter starts filling the molding cavity from the bottom thereof gradually. Since the groove is thus filled with the resin before the cavity is filled with it, the resin does not flow from the cavity into the groove over the wall. For that reason, air is prevented from being involved by the resin into the groove to cause a molding defect such as a cavity and a luster nonuniformity when the coating layer is molded of the resin. It is thus made possible to inject the resin and mold the coating layer in a short time.

### DESCRIPTION OF THE DRAWINGS

Fig. 1 is a bottom view of the steering wheel core on which a coating layer is molded of a synthetic resin in a method which is an embodiment of the present invention;
Fig. 2 is an enlarged partial perspective view of the core;
Fig. 3 is a partial sectional view of the core along a line III-III shown in Fig. 2 ;
Fig. 4 is a sectional view showing that the core is set in a molding die unit;
Fig. 5 is a sectional view showing the interior of the cavity of the molding die unit at the end of the molding of the coating layer;
Fig. 6 is a bottom view of a steering wheel having the coating layer molded;
Fig. 7 is an enlarged partial perspective view of a major part of the annular portion of a steering wheel core on which a coating layer is molded in a method which is another embodiment of the present invention;
Fig. 8 is a partial sectional view of the major part along a line VIII-VIII shown in Fig. 7; and
Fig. 9 is a partial sectional view showing that a coating layer is molded of a synthetic resin on a conventional steering wheel core in a conceivable method.

### DETAILED DESCRIPTION OF EXEMPLARY EMBODIMENTS

Embodiments of the present invention are hereafter described in detail with reference to the drawings attached hereto.

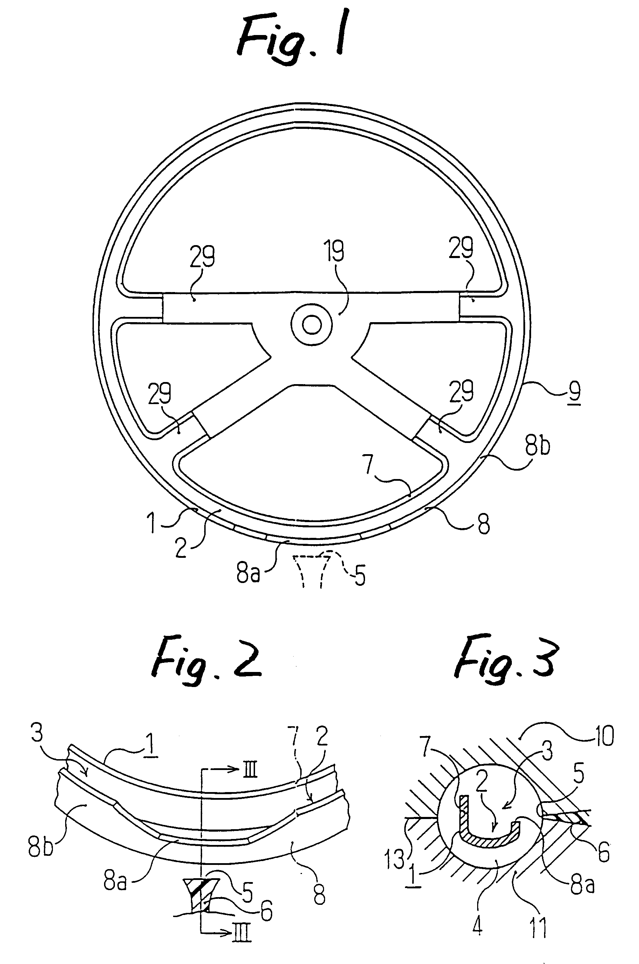

Figs. 1, 2, 3, 4, 5 and 6 are for describing a method which is one of the embodiments and in which a steering wheel 15 is manufactured. In the method, the core 9 of the steering wheel is composed of a boss 19, an annular portion 1 located around the boss and having a groove 2 having a nearly U-shaped cross section and extending in the circumferential direction of the annular portion, and spokes 29 coupling the boss and the annular portion to each other, as shown in Fig. 1. The annular portion 1 has two walls 7 and 8 defining the groove 2 between them. The wall 8 faces a gate 5 provided at the separation surfaces 13 of a molding die unit 12 consisting of an upper and a lower molding dies 10 and 11, and has a notched part 8a which is notched to be smaller in height than the other part 8b of the wall and is located near the gate 5, as shown in Fig. 2. When the core 9 is set in the molding cavity 4 of the molding die unit 12, the top of the notched part 8a of the wall 8 is located below the separation surfaces 13 of the upper and the lower molding dies 10 and 11.

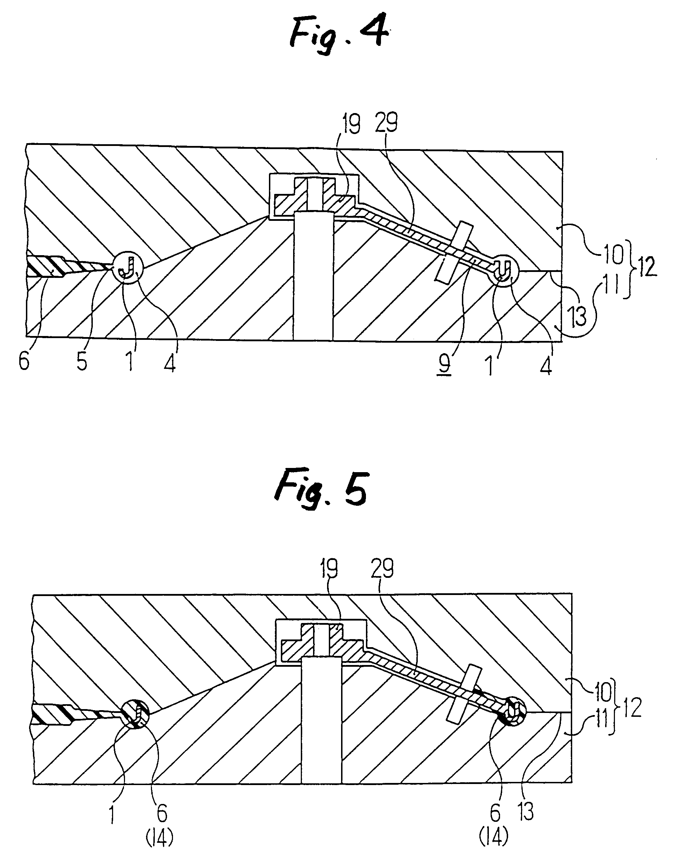

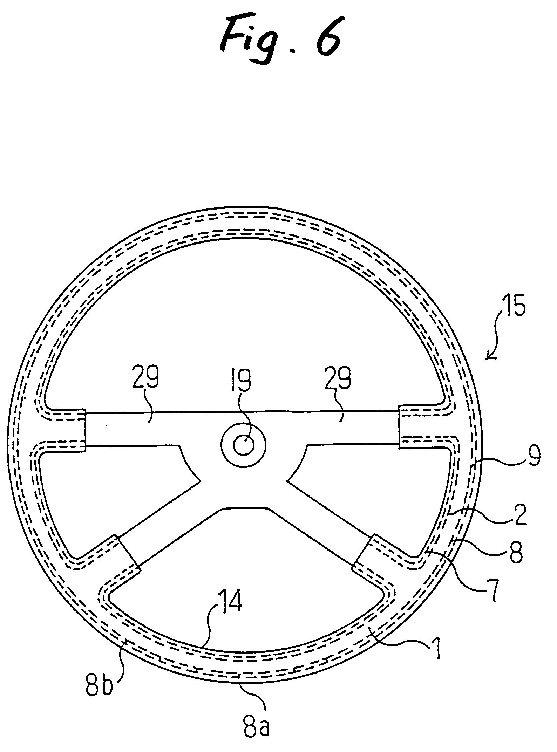

The method of manufacturing the steering wheel, in which a coating layer 14 is molded on the core 9, is described step by step from now on. In the die opening step of the method, the upper and lower molding dies 10 and 11 of the molding die unit 12, which has the gate 5 formed at the separation surfaces 13 of the dies and communicating with the molding cavity 4, are opened from each other. In the core setting step of the method after that, the core 9 is set in the lower molding die 11 so that the outer most part 3 of the groove 2 of the annular portion 1 of the core is located as the top of the groove, the notched part 8a of the wall 8 of the annular portion faces the gate 5 of the molding die unit 12, and the top of the notched part is located in the molding cavity 4 and below the separation surfaces 13 of the die unit, as shown in Figs. 3 and 4. In the coating layer molding step of the method after that, the upper and the lower molding dies 10 and 11 are closed on each other, an urethane resin 6 is injected into the molding cavity 4 through the gate 5 so that the coating layer 14 is molded of the urethane resin on the core 9. In that step, since the top of the notched part 8a of the wall 8 facing the gate 5 is located below the separation surfaces 13 of the molding die unit 12, the liquefied urethane resin hardly comes into contact with the wall 8 but passes over the wall and comes into contact with the other wall 7 facing the boss 19, so that the resin gravitates into the groove 2, flows in the groove at the bottom thereof from the notched part in the circumferential direction of the annular portion 1 of the core 9 and overflows the notched part, and most of the resin overflowing the notched part fills the cavity 4 from the bottom gradually. In the coating layer molding step of the method after that, all of the cavity 4 is thus filled with the urethane resin 6 so that the coating layer 14 is molded of the resin on the core 9, as shown in Fig. 5. In the steering wheel takeout step of the method after that, the upper and the lower molding dies 10 and 11 are opened from each other, and the steering wheel 15 including the core 9 and the coating layer 14 molded thereon is taken out from the molding die unit 12, as shown in Fig. 6.

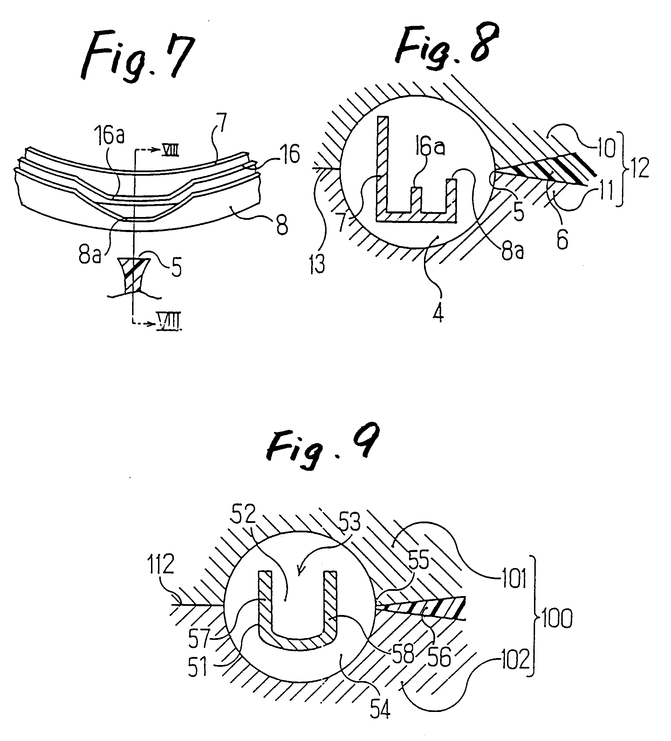

The present invention is not confined to the embodiment described above, but may be practiced or embodied in other various ways without departing from the spirit or essential character thereof. For example, in a steering wheel manufacturing method which is another embodiment of the invention, the annular portion 1 of the core of a steering wheel is made of three walls 7, 8 and 16, as shown in Figs. 7 and 8. The wall 8, which faces the gate 5 of a molding die unit 12, and the central wall 16 have notched parts 8a and 16a, which are located near the gate. The parts 8a and 16a are notched to be smaller in height than the other wall 7 facing the boss of the core. It is preferable that the notched part 16a of the central wall 16 is made smaller in height than that 8a of the wall 8 but larger in circumferential length than the latter to cause a synthetic resin 6 to more efficiently flow into the narrow grooves 2 of the annular portion 1 of the core.

## Claims

1. A method of manufacturing a steering wheel, in which a coating layer (14) is molded of a synthetic resin (6), by using a molding die unit, on at least the annular portion of a steering wheel core (9) including a boss (19), said portion located around said boss (19) and having a groove (2) extending the circumferential direction of said portion, and spokes (29) coupling said boss (19) and said portion to each other, characterized by comprising the steps of:
opening an upper and a lower molding dies (10, 11) which have a gate (5) formed at the separation surfaces (13) of said dies (10, 11) and communicating with a molding cavity (4) of said molding die unit;
setting the core (9) in said molding cavity (4) so that the opening of said groove (2) of said annular portion, having first and second walls (7, 8) defining said groove (2) between them, is located at the top of said groove (2), said first wall (8), which faces said gate (5) and has a notched part (8a) notched to be smaller in height than said second wall (7), faces said gate (5) at said notched part (8a), and the top of said notched part (8a) is located vertically below said separation surfaces (13);
closing said upper and said lower molding dies (10, 11);
molding a coating layer (14) in which a resin (6) is injected into said cavity (4) through said gate (5), flowing into said groove (2) through said notched part and then filling the molding cavity (4) from its bottom, so that said coating layer (14) is molded of said resin (6) on said core (9); and
taking out a steering wheel (15) from said die unit in which said dies (10, 11) are opened from each other and said wheel (15) is taken out from said dies (10, 11).

2. A method of manufacturing a steering wheel according to claim 1, in which said core (9) further comprises a central wall (16) having notched parts (16a) which are located near said gate (5).

3. A method of manufacturing a steering wheel according to claim 2, in which said notched parts (16a) of said central wall (16) are made smaller in height than said second wall (7).

4. A method of manufacturing a steering wheel according to claim 3, in which said notched parts (16a) of said central wall (16) are made smaller in height than said notched parts (8a) of said first wall (8).

## Patentansprüche

1. Verfahren zum Herstellen eines Lenkrads, bei dem eine Überzugschicht (14) aus einem Kunstharz (6) unter Verwendung eines Formwerkzeuges angeformt wird, auf wenigstens dem ringförmigen Teil eines Lenkradkerns (9) einschließlich einer Nabe (19), dem Teil, der um die Nabe (19) gelegen ist und eine Nut (2) aufweist, die sich in Umfangsrichtung dieses Teils erstreckt, und auf Speichen (29), die die Nabe (19) und den Teil miteinander verbinden, **gekennzeichnet** durch die folgenden Schritte:
Öffnen des oberen und des unteren Formteils (10, 11), die einen an den Trennflächen (13) der Formteile (10, 11) ausgebildeten Anguß (5) aufweisen, der mit einem Formhohlraum (4) des Formwerkzeuges in Verbindung steht;
Einsetzen des Kerns (9) in den Formhohlraum (4), so daß die Öffnung der Nut (2) des ringförmigen Teils, der eine erste und eine zweite Wand (7, 8) aufweist, die zwischen sich die Nut (2) definieren, oben gelegen ist, die erste Wand (8), die dem Anguß (5) gegenüberliegt und eine eingekerbten Abschnitt (8a) aufweist, dessen Einkerbung kleiner in der Höhe als die zweite Wand (7) ist, dem Anguß (5) mit dem eingekerbten Abschnitt (8a) gegenüberliegt und die obere Seite des eingekerbten Abschnittes (8a) in senkrechter Richtung unterhalb der Trennflächen (13) positioniert ist;
Schließen des oberen und des unteren Formteils (10, 11);
Formen der Überzugschicht (14), wobei das Harz (6) in den Formhohlraum (4) über den Anguß (5) eingespritzt wird, dieses über die Nut (2) durch den eingekerbten Abschnitt strömt und dann vom Boden her den Formhohlraum (4) füllt, so daß die Überzugschicht (14) aus dem Harz (6) auf dem Kern (9) geformt wird; und
Entnehmen des Lenkrads (15) aus dem Formwerkzeug, bei welchem die Formteile (10, 11) voneinander entfernt und das Lenkrad (15) aus den Formteilen (10, 11) entnommen wird.

2. Verfahren zum Herstellen eines Lenkrads nach Anspruch 1, bei dem der Kern (9) ferner eine mittlere Wand (16) mit eingekerbten Abschnitten (16a) enthält, die in der Nähe des Angußes (5) angeordnet werden.

3. Verfahren zum Herstellen eines Lenkrads nach Anspruch 2, bei dem die eingekerbten Abschnitte (16a) der mittleren Wand (16) in der Höhe kleiner als in der zweiten Wand (7) ausgebildet sind.

4. Verfahren zum Herstellen eines Lenkrads nach Anspruch 3, bei dem die eingekerbten Abschnitte (16a) der mittleren Wand (16) in der Höhe kleiner als die eingekerbten Abschnitte (8a) der ersten Wand (8) ausgebildet sind.

## Revendications

1. Procédé de fabrication d'un volant, dans lequel on moule une couche de revêtement (14) en résine synthétique (6) en utilisant une unité de moulage, au moins sur la partie annulaire d'une âme de volant (9) qui comprend un moyeu (19), ladite partie annulaire étant située autour dudit moyeu (19) et présentant une gorge (2) qui s'étend dans la direction circonférentielle de ladite partie, et des rayons (29) qui accouplent ledit moyeu (19) et ladite partie annulaire l'un à l'autre, caractérisé en ce qu'il comprend les étapes consistant à :
- ouvrir une matrice de moulage supérieure (10) et une matrice de moulage inférieure (11) qui comportent un orifice (5) formé à la surface de séparation (13) desdites matrices (10, 11) et communiquant avec une cavité de moulage (4) de ladite unité de moulage ;
- mettre en place l'âme (9) dans ladite cavité de moulage (4) de sorte que l'ouverture de ladite gorge (2) de ladite partie annulaire, qui présente une première paroi (7) et une seconde paroi (8) qui définissent entre elles ladite gorge (2), est située au sommet de ladite gorge (2), ladite première paroi (8) qui fait face à ladite porte (5) et qui comporte une partie entaillée (8a) de hauteur plus faible que ladite seconde paroi (7), faisant face à ladite porte (5) au niveau de ladite partie entaillée (8a), et le sommet de ladite partie entaillée (8a) étant situé verticalement au-dessous de ladite surface de séparation (13) ;
- fermer lesdites matrices de moulage supérieure et inférieure (10, 11) ;
- mouler une couche de revêtement (14), en injectant une résine (6) à l'intérieur de ladite cavité (4) à travers ledit orifice (5), ladite résine s'écoulant à l'intérieur de ladite gorge (2) à travers ladite partie entaillée et remplissant ensuite la cavité de moulage (4) depuis le fond de celle-ci, de sorte que ladite couche de revêtement (14) est moulée avec ladite résine (6) sur ladite âme (9) ; et
- enlever un volant (15) hors de ladite unité de moulage, en ouvrant lesdites matrices (10, 11) l'une par rapport à l'autre et en enlevant ledit volant (15) hors desdites matrices (10, 11).

2. Procédé de fabrication d'un volant selon la revendication 1, dans lequel ladite âme (9) comprend en outre une paroi centrale (16) qui comporte des parties entaillées (16a) qui sont situées au voisinage dudit orifice (5).

3. Procédé de fabrication d'un volant selon la revendication 2, dans lequel lesdites parties entaillées (16a) de ladite paroi centrale (16) sont réalisées avec une hauteur inférieure à ladite seconde paroi (7).

4. Procédé de fabrication d'un volant selon la revendication 3, dans lequel lesdites parties entaillées (16a) de ladite paroi centrale (16) sont réalisées avec une hauteur inférieure auxdites parties entaillées (8a) de ladite première paroi (8).
